# FASCICULE DE BREVET EUROPEEN

(11) **EP 2 035 688 B1**
(45) Date de publication et mention de la délivrance du brevet: **11.08.2010**
(21) Numéro de dépôt: 07789011.9
(22) Date de dépôt: 15.06.2007
(51) Int. Cl.: F02M 61/16, F02M 61/14, F16F 15/02

(54) **DISPOSITIF POUR AMORTIR LE BRUIT ET LES VIBRATIONS DUES AUX INJECTEURS DANS UN MOTEUR DE VEHICULE**
VORRICHTUNG ZUM ABDÄMPFEN DES LÄRMS UND DER SCHWINGUNGEN, DER BZW. DIE AUF EINSPRITZVORRICHTUNGEN IN EINEM FAHRZEUGMOTOR ZURÜCKZUFÜHREN IST BZW. SIND
DEVICE FOR DEADENING THE NOISE AND VIBRATIONS ATTRIBUTABLE TO THE INJECTORS IN A VEHICLE ENGINE

(30) Priorité: 05.07.2006 FR 0652809
(43) Date de publication de la demande: 18.03.2009
(73) Titulaire: Peugeot Citroën Automobiles SA, 78140 Vélizy-Villacoublay (FR)
(72) Inventeur: SAUVAGE, Olivier, 92800 Puteaux (FR); TANNEAU, Olivier, 93400 Saint-Ouen (FR)
(74) Mandataire: Ménès, Catherine
(86) Numéro de dépôt international: PCT/FR2007/051447
(87) Numéro de publication internationale: WO 2008/003879

(56) Documents cités:
- EP-A1- 1 223 337
- WO-A-02/16797
- WO-A-99/61786
- DE-A1- 19 947 079
- US-B1- 6 178 950

## Description

La présente invention revendique la priorité de la demande française 0652809 déposée le 05/07/2006.

La présente invention concerne un dispositif pour amortir le bruit et les vibrations dues aux injecteurs dans un moteur de véhicule (voir US-A-6178950).

La conception des moteurs des véhicules automobiles intègre, de plus en plus, une exigence de réduction du bruit et des vibrations. De manière générale, les solutions les plus efficaces consistent à agir au plus près des sources de bruit et de vibrations, ou encore directement sur la cause du bruit et des vibrations lorsque cela est possible.

Une des sources de bruit des moteurs actuels est constituée par les injecteurs de carburant - désignés « injecteurs » dans la suite du texte -, en particulier dans le cas des moteurs Diesel. Le bruit émis trouve sa cause dans le fonctionnement même de l'injecteur. La génération de ce bruit est causée, d'une part, par l'injecteur lui-même et, d'autre part, par des structures, comme la culasse et le reste de la base moteur, qui sont excitées par l'injecteur fixé sur elles et génèrent du bruit.

Pour ces raisons, il y a un besoin de réduire le rayonnement acoustique direct et indirect des injecteurs.

On connaît, selon la demande de brevet d'invention européen n° 1 140 262 A1, un injecteur carburant qui comprend :
- un logement avec un siège de soupape,
- un organe de soupape mobile par rapport au siège de soupape,
- un passage de carburant dans le logement qui amène du carburant d'une entrée, située au dessus du siège de soupape, vers une sortie, et
- un dispositif d'amortissement qui est disposé dans le passage de carburant et fixé au logement, et qui coopère avec le logement pour amortir le bruit et les vibrations produits au cours du fonctionnement de l'injecteur, et qui est un dispositif séparé, fixé à un conduit de carburant faisant partie du passage de carburant.

De plus, toujours selon cette demande de brevet européen, le dispositif d'amortissement présente la forme d'un cylindre avec un alésage central, une de ses surfaces externes est adjacente à une surface interne du conduit de carburant et l'alésage central fait partie du passage de carburant.

La présente invention a pour but de fournir un nouveau dispositif pour amortir le bruit et les vibrations dues aux injecteurs dans un moteur de véhicule, plus performant que les solutions connues de l'art antérieur.

Elle a également pour but de fournir un tel nouveau dispositif d'amortissement du bruit et des vibrations, qui soit d'une grande efficacité du fait du principe sur lequel il fonctionne, et aussi du fait de son emplacement particulier sur le moteur.

Un autre but également de la présente invention est de réaliser un tel dispositif dont le réglage de mise au point soit facile et possible au cas par cas sur une chaîne de montage, si nécessaire.

Un autre but également de la présente invention est de réaliser un tel dispositif, qui soit applicable quelque soit le type de fixation des injecteurs.

Pour atteindre ces buts, la présente invention réalise un nouveau dispositif pour amortir le bruit et les vibrations dues aux injecteurs dans un moteur de véhicule, lequel dispositif est composé, pour chaque injecteur, d'un organe mécanique appelé « batteur » qui est monté sur la fixation de l'injecteur sur le moteur et qui est constitué d'une masse relativement rigide suspendue entre deux structures souples. Une partie de l'énergie vibratoire est ainsi « piégée » par le batteur et dissipée par dans ce dernier.

Selon un premier mode de réalisation de l'invention, la fixation de l'injecteur sur le moteur est une fixation de type fourchette, connue en soi.

Selon un autre mode de réalisation, la fixation de l'injecteur sur le moteur est une fixation de type bride, également connue en soi.

Selon un mode préféré de réalisation de l'invention, le batteur est positionné sur la fourchette du côté opposé au côté où se trouve le moyen de fixation de ladite fourchette sur le moteur.

En variante, le batteur peut être intégré sur le moyen de fixation de ladite fourchette sur le moteur.

Plus généralement, le batteur peut être fixé sur n'importe quel élément de fixation de l'injecteur.

Les deux structures souples peuvent être constituées de matériaux identiques. En variante, elles peuvent être constituées de matériaux différents.

La masse relativement rigide et les deux structures souples présentent une section qui peut être une section carrée, rectangulaire, circulaire, ou de la forme d'un polygone régulier ou irrégulier.

Selon le mode préféré de réalisation de l'invention, la masse et les deux structures sont traversées par un moyen de fixation - qui peut être une vis - du batteur sur la fixation de l'injecteur sur le moteur, et sont maintenues sur ce moyen de fixation au moyen de deux écrous situés de part et d'autre de l'ensemble formé par la masse et les deux structures.

La masse relativement rigide est réalisée, de préférence, à partir d'un métal de forte densité.

Les deux structures souples sont réalisées, de préférence, à partir de matériaux élastomères.

De préférence également, le batteur - désigné également « batteur cage amorti » - peut être protégé de l'extérieur, en le coiffant, par exemple, d'un manchon de protection.

Pour parvenir à un tel dispositif avec un réglage de mise au point facile et possible au cas par cas sur une chaîne de montage, si nécessaire, la présente invention fournit également un procédé de dimensionnement de ce dispositif. Ce procédé consiste à ajuster, au cas par cas, l'un ou plusieurs des paramètres suivants :
- la valeur de la masse relativement rigide,
- la raideur des structures souples,
- l'amortissement généré par lesdites structures,
- le serrage du moyen de fixation du batteur sur la fixation de l'injecteur,
- le positionnement précis du batteur sur la fixation (fourchette ou bride) de l'injecteur sur le moteur.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, un exemple connu de type de fixation d'injecteur sur une culasse de moteur,
- la figure 2 représente, de manière schématique, un mode de réalisation du dispositif d'amortissement selon la présente invention, et
- la figure 3 représente, de manière schématique, le dispositif d'amortissement de la figure 2, monté sur l'élément de fixation d'injecteur de la figure 1, selon un exemple de réalisation non limitatif de l'objet de la présente invention.

Les injecteurs sont, de manière classique, fixés sur la culasse ou partie supérieure du moteur, laquelle est soumise à de fortes contraintes mécaniques, chimiques et thermiques. Deux types de fixation sont actuellement utilisées : les fixations d'injecteur par bride et les fixation d'injecteur par fourchette.

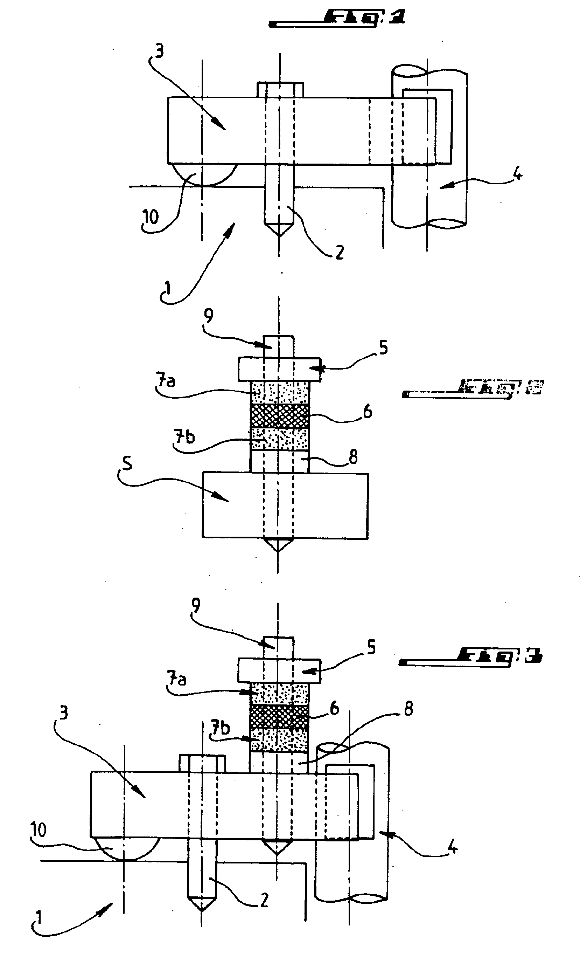

Sur le dessin de la figure 1, on a représenté une fixation classique par fourchette. La référence 4 désigne un injecteur, représenté en partie. L'injecteur 4 est fixé sur une culasse de moteur, référencée 1, par l'intermédiaire d'une fourchette de bridage 3, qui est en contact avec la face supérieure de la culasse 1 par une bille de contact 10 et est reliée fixement à la culasse par une vis 2. La partie supérieure de la culasse 1 peut être, de façon connue en soi, un couvre culasse.

En se référant au dessin de la figure 2, on va maintenant décrire le concept de la présente invention. Le dispositif de l'invention comprend un ensemble désigné « batteur cage amorti » destiné à être fixé sur une structure d'accueil référencée S. L'ensemble dit « batteur cage amorti » comprend un premier écrou 5, un second écrou 8, et entre les deux écrous 5 et 8 sont disposés une masse relativement rigide 6 « suspendue » par deux structures plus souples référencées 7a et 7b, situées de part et d'autre de ladite masse 6. Ces pièces 5, 6, 7a et 7b, et 8, sont traversées dans leur partie centrale par une vis 9, qui permet, d'une part, le serrage de ces pièces entre elles, et, d'autre part, la fixation de l'ensemble constitué par ces pièces sur ladite structure d'accueil S, cette dernière pouvant être une bride ou une fourchette telle que celle désignée 3 et représentée sur la figure 1.

L'ensemble constitué par la vis 9, la masse 6, les structures souples 7a et 7b et les écrous 5 et 8, forme le batteur cage, lequel est « amorti » du fait du pouvoir amortissant des deux structures, 7a et 7b, conféré par les capacités d'amortissement intrinsèques du ou des matériaux composant ces deux structures.

En référence au dessin de la figure 3, un batteur cage amorti, tel que celui décrit précédemment, est placé sur chaque fixation 3 d'injecteur 4. La position d'accroche du batteur cage amorti conforme à la présente invention sur la fixation 3, de type fourchette par exemple, est variable et conditionne en partie son efficacité.

Le batteur cage amorti peut être positionné sur un côté de la fourchette 3 opposé au côté où se trouve la vis de fixation 2 de la fourchette 3 sur la culasse 1. En variante, le batteur cage amorti peut être intégré sur la vis de fixation 2 elle-même.

La masse relativement rigide 6 et les deux structures souples 7a et 7b sont serrées par les deux écrous 5 et 8, et présentent une section qui peut être une section carrée, ou rectangulaire, ou circulaire, ou de la forme d'un polygone régulier ou irrégulier, etc.

La vis 9 sert de moyen de fixation du dispositif d'amortissement sur la fourchette 3.

Les deux structures souples 7a et 7b sont constituées de matériaux identiques ou différents. Elles sont, de préférence, réalisées à partir de matériaux, élastomères.

La masse rigide 6 est généralement constituée d'un métal de forte densité.

Le batteur cage amorti peut être protégé de l'extérieur, en le coiffant, par exemple, d'un manchon de protection (non représenté).

Le principe de fonctionnement du batteur cage amorti de la présente invention est le suivant : le batteur, de manière classique, crée un « piège » à vibrations. Il fonctionne en vibrant sur une bande de fréquences donnée, qui correspond à des fréquences voisines de la fréquence de résonance propre du batteur fixé sur la pièce vibrante dont on cherche à réduire les vibrations. Pour des vibrations dont les fréquences sont voisines de cette fréquence de résonance, l'énergie vibratoire de l'ensemble constitué par l'injecteur, sa fixation et son dispositif d'amortissement ou batteur, se trouve concentrée dans le batteur, qui les dissipe. Un avantage de ce principe réside dans le fait que des mouvements importants du batteur (en intensité de vitesse, notamment) ne créent pas - ou créent moins - de bruit et de nuisances.

Le batteur utilisé dans la présente invention offre deux avantages majeurs liés à sa capacité d'amortissement. D'une part, l'énergie vibratoire est non seulement « piégée », mais dissipée dans le batteur cage amorti, le (ou les) matériau(x) qui compose(nt) les parties 7a et 7b étant, en effet, choisi(s) aussi pour leur capacité d'amortissement interne. D'autre part, l'apport d'amortissement du batteur permet d'élargir son domaine d'efficacité en fréquences (sa ou ses bande(s) passante(s)) et améliore la robustesse de la mise au point du système pour un point de fonctionnement choisi.

Il va de soi que le batteur, dans sa constitution (fonctionnellement : masses, raideur, amortissement) et sa configuration, peut aisément être adapté à la structure à traiter sans sortir des principes et de la portée de la présente invention.

Comme mentionné précédemment, c'est aussi un but de la présente invention de réaliser un dispositif d'amortissement dont la mise au point soit ajustable facilement, notamment au cas par cas sur une chaîne de montage, si nécessaire.

Ce but est atteint grâce aux multiples paramètres sur lesquels on peut facilement agir.

Ainsi, le dimensionnement du dispositif d'amortissement peut se faire en agissant sur l'un ou plusieurs des paramètres suivants :
- la valeur de la masse relativement rigide 6,
- la raideur des structures relativement souples 7a et 7b,
- l'amortissement généré par ces structures 7a et 7b,
- le serrage de la vis de l'écrou 5, lequel donne la précontrainte statique : ce serrage joue le rôle d'un réglage fin de la raideur des structures 7a et 7b,
- le positionnement précis du batteur cage amorti sur la fixation 3.

Le dimensionnement peut s'effectuer à l'aide des méthodes connues en soi des ingénieurs pour mettre au point des batteurs. Il peut, par exemple, s'agir de méthodes dites « de raccordement dynamique », dans lesquelles on aura, bien entendu, tenu compte de - et modélisé - l'amortissement.

Le positionnement optimal est en pratique souvent obtenu sur la partie de fixation 3 qui est la plus proche de l'injecteur 4, qui est la source de bruit et de vibrations à atténuer.

## Revendications

1. Dispositif pour amortir le bruit et les vibrations dues aux injecteurs dans un moteur de véhicule, **caractérisé en ce qu'**il est composé, pour chaque injecteur (4), d'un batteur monté sur la fixation (3) de l'injecteur (4) sur le moteur, ledit batteur comprenant une masse (6) relativement rigide suspendue entre deux structures (7a, 7b) plus souples de façon à dissiper de l'énergie vibratoire.

2. Dispositif selon la revendication 1, **caractérisé en ce que** ladite fixation (3) est une fixation de type fourchette.

3. Dispositif selon la revendication 1, **caractérisé en ce que** ladite fixation (3) est une fixation de type bride.

4. Dispositif selon la revendication 2, **caractérisé en ce que** le batteur est positionné sur la fourchette (3) de l'autre côté par rapport au moyen de fixation (2) de ladite fourchette (3) sur le moteur.

5. Dispositif selon la revendication 2, **caractérisé en ce que** le batteur est intégré sur le moyen de fixation (2) de ladite fourchette (3) sur le moteur.

6. Dispositif selon l'une quelconque des revendications 1 à 5, **caractérisé en ce que** lesdites deux structures (7a, 7b) sont constituées de matériaux différents.

7. Dispositif selon l'une quelconque des revendications 1 à 6, **caractérisé en ce que** ladite masse (6) et lesdites deux structures (7a, 7b) présentent une section choisie parmi les figures suivantes : carré, rectangle, cercle, polygone régulier ou irrégulier.

8. Dispositif selon l'une quelconque des revendications 1 à 7, **caractérisé en ce que** ladite masse (6) et lesdites deux structures (7a, 7b) sont traversées par le moyen de fixation (9) du batteur sur la fixation (3) de l'injecteur (4) sur le moteur.

9. Dispositif selon la revendication 8, **caractérisé en ce que** ladite masse (6) et lesdites deux structures (7a, 7b) sont maintenues sur ledit moyen de fixation (9) du batteur au moyen de deux écrous (5, 8) situés de part et d'autre de l'ensemble formé par la masse (6) et les deux structures (7a, 7b).

10. Dispositif selon l'une quelconque des revendications 1 à 9, **caractérisé en ce que** la masse (6) est constituée d'un métal de forte densité.

11. Dispositif selon l'une quelconque des revendications 1 à 10, **caractérisé en ce que** les deux structures (7a, 7b) sont réalisées en matériau élastomère.

12. Dispositif selon l'une quelconque des revendications 1 à 11, **caractérisé en ce que** le batteur est coiffé d'un manchon de protection.

13. Procédé de dimensionnement d'un dispositif d'amortissement conforme à l'une quelconque des revendications 1 à 12, **caractérisé en ce que** l'on ajuste, au cas par cas, l'un ou plusieurs des paramètres suivants dudit dispositif :
- la valeur de la masse (6) relativement rigide,
- la raideur des structures souples (7a, 7b),
- l'amortissement généré par lesdites structures (7a, 7b,
- le serrage du moyen de fixation (9, 5) du batteur (5, 6, 7a, 7b, 8, 9) sur la fixation (3) de l'injecteur (4),
- le positionnement précis du batteur cage amorti (5, 6, 7a, 7b, 8, 9) sur la fixation (3) de l'injecteur (4) sur le moteur.

## Claims

1. Device for deadening the noise and vibrations due to the injectors in a vehicle engine, **characterized in that** it is composed, for each injector (4) of a beater mounted on the fixing (3) of the injector (4) on the engine, the said beater comprising a relatively rigid mass (6) suspended between two more flexible structures (7a, 7b) so as to dissipate vibratory energy.

2. Device according to Claim 1, **characterized in that** the said fixing (3) is a fixing of the fork type.

3. Device according to Claim 1, **characterized in that** the said fixing (3) is a fixing of the flange type.

4. Device according to Claim 2, **characterized in that** the beater is positioned on the fork (3) on the other side with respect to the fixing means (2) of said fork (3) on the engine.

5. Device according to Claim 2, **characterized in that** the beater is integrated on the fixing means (2) of the said fork (3) on the engine.

6. Device according to any one of Claims 1 to 5, **characterized in that** the said two structures (7a, 7b) are constituted by different materials.

7. Device according to any one of Claims 1 to 6, **characterized in that** the said mass (6) and the said two structures (7a, 7b) present a section selected from the following figures: square, rectangle, circle, regular or irregular polygon.

8. Device according to any one of Claims 1 to 7, **characterized in that** the said mass (6) and the said two structures (7a, 7b) are traversed by the fixing means (9) of the beater on the fixing (3) of the injector (4) on the engine.

9. Device according to Claim 8, **characterized in that** the said mass (6) and the said two structures (7a, 7b) are held on the said fixing means (9) of the beater by means of two nuts (5, 8) situated on either side of the assembly formed by the mass (6) and the two structures (7a, 7b).

10. Device according to any one of Claims 1 to 9, **characterized in that** the mass (6) is constituted by a high-density metal.

11. Device according to any one of Claims 1 to 10, **characterized in that** the two structures (7a, 7b) are made of elastomer material.

12. Device according to any one of Claims 1 to 11, **characterized in that** the beater is capped by a protective sleeve.

13. Method for dimensioning a deadening device according to any one of Claims 1 to 12, **characterized in that** one or more of the following parameters of the said device are adjusted on a case-by-case basis:
- the value of the relatively rigid mass (6),
- the rigidity of the flexible structures (7a, 7b),
- the deadening generated by the said structures (7a, 7b),
- the tightening of the fixing means (9, 5) of the beater (5, 6, 7a, 7b, 8, 9) on the fixing (3) of the injector (4),
- the precise positioning of the deadened beater cage (5, 6, 7a, 7b, 8, 9) on the fixing (3) of the injector (4) on the engine.

## Patentansprüche

1. Vorrichtung zum Dämpfen des Geräuschs und der Schwingungen aufgrund der Einspritzdüsen in einem Kraftfahrzeugmotor, **dadurch gekennzeichnet, dass** sie für jede Einspritzdüse (4) aus einem Schläger besteht, der auf die Befestigung (3) der Einspritzdüse (4) auf dem Motor montiert ist, wobei der Schläger eine relativ starre Masse (6) aufweist, die zwischen zwei Strukturen (7a, 7b), die biegsamer sind, aufgehängt ist, so dass die Schwingungsenergie abgeleitet wird.

2. Vorrichtung nach Anspruch 1, **dadurch gekennzeichnet, dass** die Befestigung (3) eine Befestigung des Typs Gabel ist.

3. Vorrichtung nach Anspruch 1, **dadurch gekennzeichnet, dass** die Befestigung (3) eine Befestigung des Typs Flansch ist.

4. Vorrichtung nach Anspruch 2, **dadurch gekennzeichnet, dass** der Schläger auf der Gabel (3) auf der anderen Seite in Bezug zu dem Befestigungsmittel (2) der Gabel (3) auf dem Motor positioniert ist.

5. Vorrichtung nach Anspruch 2, **dadurch gekennzeichnet, dass** der Schläger auf dem Befestigungsmittel (2) der Gabel (3) auf dem Motor integriert ist.

6. Vorrichtung nach einem der Ansprüche 1 bis 5, **dadurch gekennzeichnet, dass** die zwei Strukturen (7a, 7b) aus unterschiedlichen Werkstoffen bestehen.

7. Vorrichtung nach einem der Ansprüche 1 bis 6, **dadurch gekennzeichnet, dass** die Masse (6) und die zwei Strukturen (7a, 7b) einen Querschnitt aufweisen, der aus den folgenden Figuren ausgewählt ist: Quadrat, Rechteck, Kreis, regelmäßiges oder unregelmäßige Vieleck.

8. Vorrichtung nach einem der Ansprüche 1 bis 7, **dadurch gekennzeichnet, dass** die Masse (6) und die zwei Strukturen (7a, 7b) von dem Befestigungsmittel (9) des Schlägers auf der Befestigung (3) der Einspritzdüse (4) auf dem Motor durchquert sind.

9. Vorrichtung nach Anspruch 8, **dadurch gekennzeichnet, dass** die Masse (6) und die zwei Strukturen (7a, 7b) von dem Befestigungsmittel (9) des Schlägers mittels zwei Muttern (5, 8), die sich zu beiden Seiten der Einheit, die aus der Masse (6) und den zwei Strukturen (7a, 7b) gebildet sind, liegen, gehalten werden.

10. Vorrichtung nach einem der Ansprüche 1 bis 9, **dadurch gekennzeichnet, dass** die Masse (6) aus einem Metall mit hoher Dichte besteht.

11. Vorrichtung nach einem der Ansprüche 1 bis 10, **dadurch gekennzeichnet, dass** die zwei Strukturen (7a, 7b) aus Elastomermaterialien hergestellt sind.

12. Vorrichtung nach einem der Ansprüche 1 bis 11, **dadurch gekennzeichnet, dass** auf dem Schläger eine Schutzmuffe sitzt.

13. Verfahren zum Bemessen einer Dämpfvorrichtung nach einem der Ansprüche 1 bis 12, **dadurch gekennzeichnet, dass** man einen oder mehrere der folgenden Parameter der Vorrichtung einzeln anpasst:
- den Wert der relativ starren Masse (6),
- die Steifigkeit der biegsamen Strukturen (7a, 7b),
- die von den Strukturen (7a, 7b) erzeugte Dämpfung,
- das Festziehen der Befestigungsmittel (9, 5) des Schlägers (5, 6, 7a, 7b, 8, 9) auf der Befestigung (3) der Einspritzdüse (4),
- die genaue Positionierung des gedämpften Käfigschlägers (5, 6, 7a, 7b, 8, 9) auf der Befestigung (3) der Einspritzdüse (4) auf dem Motor.
